# EUROPEAN PATENT SPECIFICATION

(11) **EP 3 814 048 B1**
(45) Date of publication and mention of the grant of the patent: **12.03.2025**
(21) Application number: 19746172.6
(22) Date of filing: 26.06.2019
(51) Int. Cl.: B23Q 7/14, B24B 9/00, B24B 9/06, B24B 27/00, B65G 15/16

(54) **SYSTEM FOR ADJUSTING THE PRESSURE IN SYSTEMS FOR TILES HOLDING DURING A SQUARING STEP**
SYSTEM ZUM EINSTELLEN DES DRUCKS IN SYSTEMEN ZUM HALTEN VON FLIESEN WÄHREND EINES QUADRIERUNGSSCHRITTES
SYSTÈME DE RÉGLAGE DE LA PRESSION DANS DES SYSTÈMES DE MAINTIEN DE CARREAUX LORS D'UNE ÉTAPE D'ÉQUARRISSAGE

(30) Priority: 28.06.2018 IT 201800006792
(43) Date of publication of application: 05.05.2021
(73) Proprietor: Ancora S.p.A., 41049 Sassuolo (MO) (IT)
(72) Inventor: STEFANI, Antonio, 41049 Sassuolo (Modena) (IT)
(74) Representative: Feltrinelli, Secondo Andrea
(86) International application number: PCT/IB2019/055397
(87) International publication number: WO 2020/003155

(56) References cited:
- WO-A1-2016/207814
- WO-A1-2017/015205

## Description

The present invention relates to a squaring machine provided with an automatic system for adjusting the pressure of the slabs retaining systems in the squaring phase.

### TECHNICAL BACKGROUND

As known, in the squaring phase the slabs or tiles advance on lower toothed transport belts to undergo processing on respective sides by means of wheels and are held in position by upper pressure belts provided with rubber covering which accompany them along the path. Naturally, the upper belts are perfectly synchronous with the lower transport ones and run driven by sprung supports pressed against the surface of the slabs by means of pneumatic cylinders.

The working pressure of these pneumatic cylinders determines the force with which the upper belts act on the slabs to hold them in position avoiding transversal movements that would result in inaccuracies in the processing of the respective sides.

Depending on the thickness of the material to be processed, it is advisable that the lower end-of-stroke position of the cylinders is such that in the absence of tiles the upper belts reach 1-2 mm below the level corresponding to that of the upper surface of the sliding tiles on the lower belts, so as to undergo a corresponding elastic crushing when the tiles arrive, thus exerting the necessary retaining force on the latter.

If a thicker tile than the others should enter the machine, the elastic deformation could also be associated with a lifting of the pressure cylinders which are normally fed at about 2 bar and which therefore yield when the elastic deformation force of the sprung system and of the belt covering reaches and exceeds their workforce.

WO2017015205 discloses a solution according to the state of the art.

From WO 2017/015205 A1 there is known a machine for processing plates or tiles comprising at least one means for moving said tiles in said machine, at least one tool for treating tiles as well as at least one component for pressing tiles against said at least one moving means, said machine further comprising a system for adjusting the position of said at least one pressing component in at least one respective operating or work trim, said adjustment system including at least one actuator for moving said at least one pressing component.

### OBJECTS OF THE INVENTION

An object of the present invention is to provide a new tile processing machine, such as a squaring machine.

Another object of the present invention is to provide a tile processing machine suitable for processing tiles or slabs of different thickness.

Another object of the present invention is to provide a new machine as mentioned above capable of automatically adjusting the pressure of the slab retaining systems during the squaring phase.

According to one aspect of the invention a machine according to claim 1 is provided.

The dependent claims refer to preferred and advantageous embodiments of the invention.

### BRIEF DESCRIPTION OF THE DRAWINGS

Other characteristics and advantages of the invention will be more evident from the description of an embodiment of a tile processing machine, illustrated by way of example in the accompanying drawings wherein:

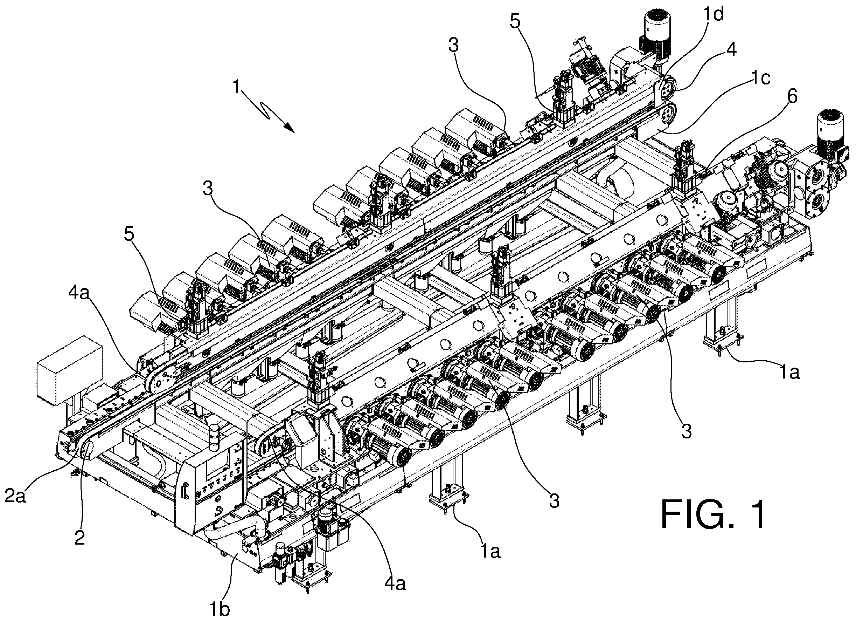

- figure 1 is a perspective view of a machine according to the present invention;

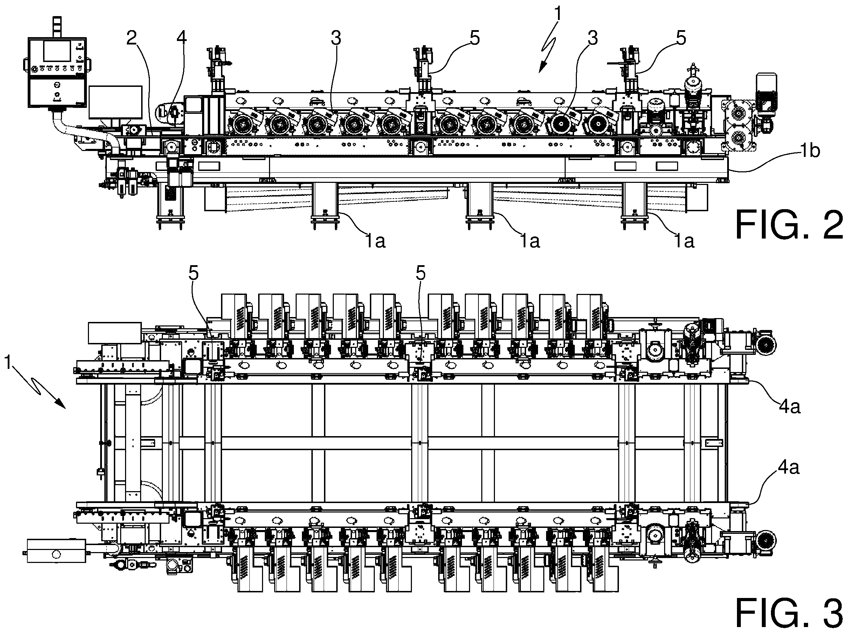

- figure 2 is a side view of the machine of figure 1;
- figure 3 is a plan view of the machine shown in figure 1;

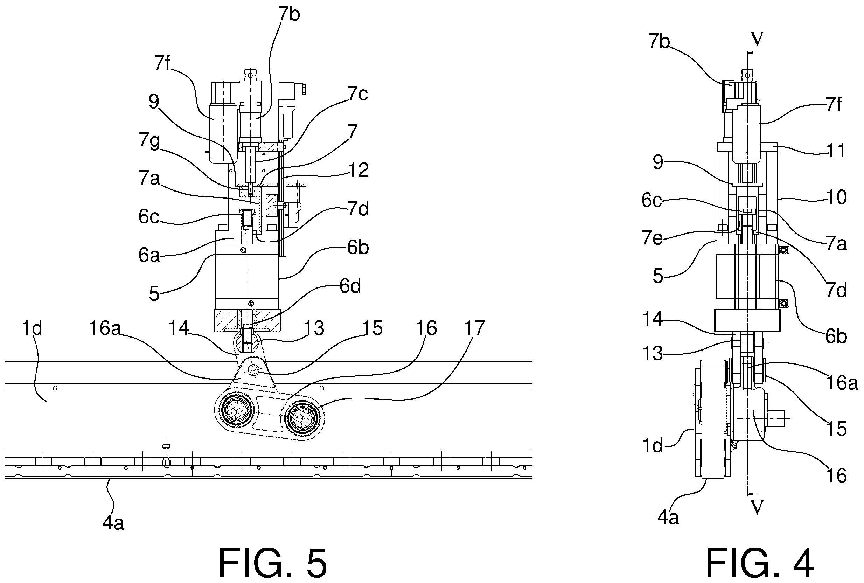

- figure 4 is a view of a detail in an enlarged scale of the machine of figure 1;
- figure 5 is a view with parts in section taken along the line V-V of figure 4;

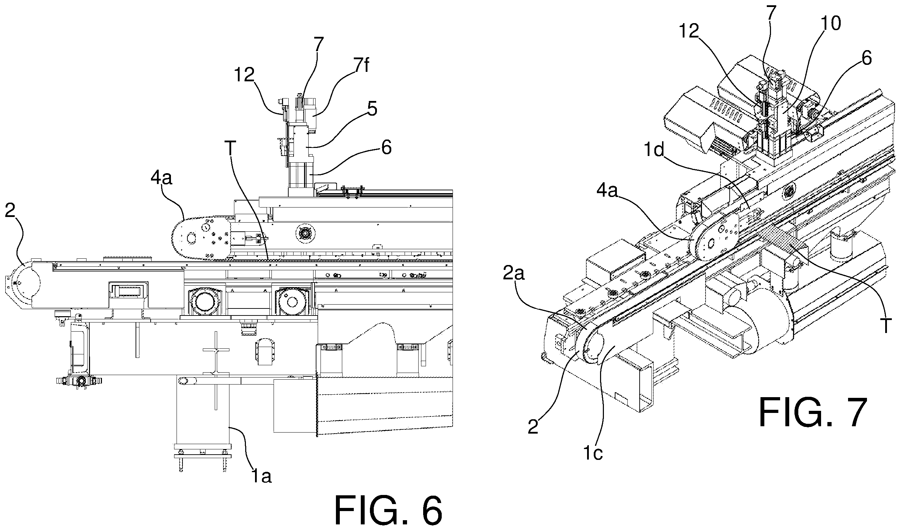

- figure 6 is a side view of part of the machine of figure 1 during the treatment of a tile;
- figure 7 is a perspective view of part of the machine of figure 1 during the treatment of a tile; and

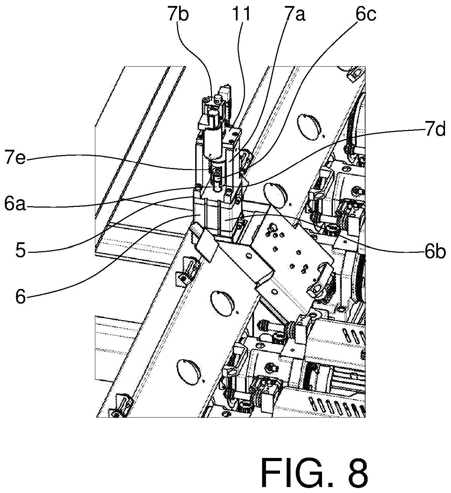

- figure 8 is a view of a detail in an enlarged view of the machine of figure 1.

In the accompanying drawings, identical parts or components are distinguished by the same reference numerals.

### EMBODIMENTS OF THE INVENTION

With reference to the attached figures, a tile processing machine 1 according to the present invention is illustrated, for example a squaring machine for slabs or tiles, made of ceramic material, which machine comprises at least one moving means 2 of tiles T in the machine, a plurality of treatment tools 3 of the tiles T, suitably motorized, as well as at least one pressing component 4 of the tiles against the moving or advancing means 2.

Naturally, the machine comprises one or more bases or supporting feet 1a of a main frame or structure 1b on which are mounted one or more lower beams 1c supporting the moving or advancing means 2 and one or more upper support beams 1d of the pressing components 4. More particularly, two lower beams 1c are provided slidably mounted on the frame or main structure 1b and approachable/movable away by respective first actuator means and two upper beams 1d slidably mounted on the frame or main structure 1b approachable/movable away by the first actuator means.

The moving means 2 can comprise lower belts, for example toothed transport belts suitably actuated by a suitable motor.

In any case, the lower belts define a bearing plane for the tiles T, which bearing plane is facing upwards.

The tile treatment tools 3 can instead comprise a plurality of grinding wheels 3 arranged on the sides of the moving means 2 and more in particular a first plurality of wheels opposite to a second plurality of wheels with respect to the belts 2, so as to ensure the treatment of opposite flanks of slabs or tiles T dragged on the moving means 3. Preferably, the treatment tools 3 have a work front or free working face facing a respective flank of the belts 2 and are rotatable, by means of a respective motor, around an axis in horizontal and transverse or orthogonal use with respect to the advancement direction of the tiles T on the moving means 2.

More particularly, two plurality or rows of tools 3 are provided, each provided on a respective side of the moving means 2, between which rows the width of the advancement area of the tiles or slabs supported by the moving means 2 is defined.

The machine 1 further comprises an automatic adjustment system 5 of the position of the pressing component 4 in at least one respective operating trim, which adjustment system 5 includes at least one moving actuator 6, for example pneumatic, electric or hydraulic, of the pressing component 4 and automatic regulating means 7 of at least one working or end-of-stroke position of the moving actuator 6, in particular a position of the end-of-stroke moving actuator 6, lower or proximal, in use, to the pressing component 4.

As will be understood, the moving actuator 6 can be moved between a first position or rest position or a lifted position and a second position or working position or end-of-stroke position or lower position. In the first position the actuator 6 does not press or engage or act on the or on a respective pressing component 4 or otherwise presses it less towards the moving means 2 with respect to the second position, whereas in the second position or working position or end-of-stroke position or lower position, the actuator presses or engages or acts on the or on a respective pressing component 4 or in any case presses it towards the moving means 2 to a greater extent than the first position.

If desired, the moving actuator 6 comprises at least a first stem 6a and a cylinder 6b wherein the stem 6a is slidably mounted so as to be insertable/releasable in/from the cylinder 6b, while the automatic regulating means 7 comprise an abutment element 7a of the displacement of the stem 6a or of the cylinder 6b and an auxiliary actuator 7b, for example electric, if desired screw electric, which auxiliary actuator 7b is designed to displace the abutment element 7a, in particular upwards or downwards, thus varying the end-of-stroke position of the actuator 6 or better of the stem 6a or of the cylinder 6b.

As far as the pressing component 4 is concerned, it can comprise at least one belt 4a, upper in use, if desired provided with a rubber covering, returned in a closed loop by means of respective pulleys and in this case the moving actuator 6 includes at least a second stem 6d slidably mounted so as to be insertable/releasable in/from the cylinder 6b and possibly integral or rigidly constrained to the first stem 6a, which second stem 6d presses or acts or is designed to act on the at least one belt 4a or better on a respective supporting beam 1d, so as to push it towards the moving means 2 or better towards the tiles T on the moving means 2.

Clearly, the element 7a could also be an abutment of the displacement of the second stem 6d or of an appendage or projection in one piece therewith or constrained thereto.

Preferably, two or more belts 4a are provided, preferably at least one upper belt 4a for each flank of the moving means 2, so that at least one upper belt 4a is designed to press a first flank of the slabs or tiles T towards the moving means 2 and at least one upper belt 4a is designed to press a second flank opposite to the first of the slabs or tiles T towards the moving means 2.

Each upper belt 4a, if provided, is in particular returned around pulleys with vertical trim and rotatable about an axis in use horizontal and transverse or orthogonal with respect to the advancement direction of the tiles T on the moving means 2.

As far as each lower belt 2a is concerned, if provided, it is also returned in a closed loop around pulleys with vertical layout and rotatable about an axis in use horizontal and transverse or orthogonal with respect to the advancement direction of the tiles T on the moving means 2.

In this regard, in particular in the case wherein the moving means 2 comprises two lower belts 2a, then a first upper belt 4a is provided mounted above and substantially aligned with a first lower belt 2a and a second upper belt 4a mounted above and substantially aligned with a second lower belt 2a.

With reference in detail to the moving actuator 6, it can comprise a cylinder 6b and a piston mounted slidably therein.

One or more stems are then provided, for example two stems 6a, 6d which extend from opposite sides of the piston.

More specifically, a first stem 6a is provided extending, in use upward and a second stem 6d, which extends downward in use, and along the same direction or along a direction parallel to the first stem 6a, preferably, vertical in use. Of course, the moving actuator could also have only one stem.

More particularly, the belt(s) 4a is/are mounted within the or a respective upper beam 1d and the moving actuator 6 or the second stem 6d thereof is arranged to move such beam 1d, together with the belt(s) 4a approaching or moving away from the moving means 2. The moving actuator or each actuator 6 can be mounted at the top of the main frame or structure 1b, so as to be above a respective beam 1d, with a respective stem 6a in engagement from above with a respective pressing component 4.

According to the non-limiting example illustrated in the figures, the tip of the second stem 6d is mounted or fixed within a first pin or block 13 integral or connected to one or more piston rods 14 (for example two parallel piston rods) articulated or pivoted in a second pin 15 to a crank component 16 or to an appendage 16a thereof, which crank component 16b in turn is, at a second end thereof, articulated or pivoted in a third pin 17 to a beam 1d.

The lower belt 4a or each lower belt 4a can be kept in tension by means of suitable tensioning means.

The belt(s) 2a is/are mounted within the or a respective lower beam 1c and can be kept in tension by means of suitable tensioning means.

If desired, the first stem 6a may have a terminal or mushroom-shaped enlargement 6c, while the abutment element 7a may include a collar or tubular component with one end constrained or connected to the auxiliary actuator, if desired by interposing a plate 9, and the other end open and defining towards the interior of the abutment element 7a an abutment or hitting shoulder 7d for terminal or mushroom-shaped enlargement 6c.

The abutment element 7a can delimit a window 7e of greater width or dimension at its respective lateral surface for all its extension of the stem 6a and for all its extension apart from a portion at the respective greater open end of the terminal enlargement 6c, which end defines the abutment or hitting shoulder 7d for terminal or mushroom-shaped enlargement 6c.

More in detail, the machine comprises a framework 10 mounted above the moving actuator 6, which supports a flange 11 on which the auxiliary actuator 7b is mounted. The auxiliary actuator 7b is served by a special motor 7f.

A stem 7c or a cylinder of the auxiliary actuator 7b is instead mounted on or integral with a plate 9 from which the abutment element 7a rises. According to the embodiment shown in the figures, the stem 7c or an end or ferrule 7g thereof is fitted in the plate 9 and in an upper portion of the abutment element 7a.

The machine can comprise, for example 2 or 3 moving actuators 6 for each pressing component or belt, and therefore 4 or 6 for each machine, that is eight or twelve per production line.

The automatic adjustment system can include at least one sensor designed to detect the position of the auxiliary actuator 7b and possibly to communicate it to a control unit of the machine for display by an operator, who can thus evaluate whether it is appropriate to pilot the automatic regulating means 7 or for the evaluation and automatic control of the automatic regulating means 7 by the control unit.

The sensor can comprise for example a magnetostrictive transducer 12, preferably mounted parallel to the auxiliary actuator 7b or better to the insertion/release direction of the respective stem 7c. The magnetostrictive transducer 12 can be supported by the moving actuator 6 and/or by the auxiliary actuator 7b.

The machine according to the present invention also clearly comprises means for actuating and controlling the components of the machine itself, as well as electric or pneumatic power supply sources, which of course do not require a detailed description.

As will be understood, with a machine according to the present invention, in the case wherein it was necessary to move away or approach the pressing component or each pressing component 4 to the moving mean(s) 2, for example following the thickness change of the slabs or tiles to be processed or because it is noted that one or more tiles entered into the machine have a thickness greater than or smaller than a certain value, it would be sufficient to act on the automatic regulating means 7, for example on the auxiliary actuator 7b so as to vary the end-of-stroke position, in use lower or proximal to the pressing component 4 of the moving actuator 6 and therefore the position of the pressing component 4. By then actuating the moving actuator 6, the respective stem or a respective stem 6a would come out of the cylinder of the actuator 6 until it comes into contact against the abutment element 7a, thus pressing the tiles dragged onto the moving means 2 by the desired entity.

More particularly, by actuating the moving actuator 6, the latter or a second stem 4d presses on the pressing component 4 or better on a support beam 1d thereof, by means of the kinematic motion 13-17 described above if desired, moving it in an operating trim, that is to say a work trim or a trim wherein the pressing component 4 is designed to push or press the slabs or tiles towards the moving means 2. Therefore, by varying the end-of-stroke of the moving actuator 6, the operating layout of the pressing component 4 is changed.

The advantages deriving from the employment of the present invention are evident, that is to say a better adjustment of the end-of-stroke of the moving actuators, which can be carried out with great precision, saving time and effort with respect to traditional solutions.

Modifications and variants of the invention are possible within the scope defined by the claims.

## Claims

1. Machine for processing plates or tiles comprising at least one means (2) for moving said tiles (T) in said machine, at least one tool (3) for treating tiles (T) as well as at least one component (4) for pressing tiles against said at least one moving means (2), said machine further comprising a system (5) for automatically adjusting the position of said at least one pressing component (4) in at least one respective operating or work trim, said adjustment system (5) including at least one actuator (6) for moving said at least one pressing component (4), wherein said automatic adjustment system (5) comprises means (7) for automatically regulating at least one working or end-of-stroke position of said at least one moving actuator (6), and in such position said at least one moving actuator (6) presses or engages or acts on the or on a respective pressing component (4), and
wherein said at least one moving actuator (6) comprises at least one stem or a first stem (6a) and a cylinder (6b) wherein said stem or said first stem (6a) is slidably mounted so as to be insertable in and removable from the cylinder (6b), and wherein said automatic regulating means (7) comprise at least one abutment element (7a) for the movement of said at least one stem or a first stem (6a) or of said cylinder (6b) and at least one auxiliary actuator (7b) set to displace said at least one abutment element (7a), thus varying the work or end-of-stroke position of said at least one moving actuator (6).

2. Machine according to claim 1, wherein said at least one first stem (6a) has a terminal or mushroom-shaped enlargement (6c), while said at least one abutment element (7a) includes a collar or tubular component with one end constrained or connected to said auxiliary actuator (7b) and the other end open and defining, towards the interior of the abutment element (7a), an abutment or hitting shoulder (7d) for the terminal or mushroom-shaped enlargement (6c).

3. Machine according to claim 1 or 2, wherein said at least one pressing component (4) comprises at least one belt (4a) returned by means of respective pulleys and wherein said at least one moving actuator (6) includes at least one stem or a second stem (6b) acting or set to act on said at least one belt (4a) so as to push it towards said moving means (2).

4. Machine according to claim 1 and 3 or 2 and 3, wherein said at least one moving actuator (6) comprises a cylinder (6b) and a piston slidably mounted within said cylinder (6b), while the respective first (6a) and second (6d) stems of said at least one moving actuator (6) are extended starting from opposite sides of the piston and along the same direction or along directions that are parallel to each other.

5. Machine according to any one of the preceding claims when dependent on claim 2, wherein said at least one abutment element (7a) delimits, at the respective lateral surface, a window (7e) of width greater than the stem (6a) for the entire extension thereof and greater than the terminal enlargement (6c) for the entire extension thereof apart from a portion at the respective open end defining an abutment or hitting shoulder (7d) for the terminal or mushroom-shaped enlargement (6c).

6. Machine according to any one of the preceding claims, comprising a framework (10) mounted above said at least one moving actuator (6), which supports a flange (11) on which the auxiliary actuator (7b) is mounted.

7. Machine according to any one of the preceding claims, wherein a stem (7c) or a cylinder of the auxiliary actuator (7b) is mounted on or integral with a plate (9) from which said abutment element (7a) rises.

8. Machine according to any one of the preceding claims, wherein the tip of said second stem (6d) is mounted or fixed within a first pin or block (13) integral with or connected to at least one piston rod (14) articulated or pivoted in a second pin (15) to a crank component (16) or to an appendage (16a) thereof, and in turn such crank component (16b) is articulated or pivoted in a third pin (17) to a beam (1d) for supporting said at least one pressing component (4).

9. Machine according to any one of the preceding claims, wherein said at least one moving actuator (6) is pneumatic, while said at least one auxiliary actuator (7b) is electric.

10. Machine according to any one of the preceding claims, wherein said automatic adjustment system includes at least one sensor (12) set to detect the position of said at least one auxiliary actuator (7b).

11. Machine according to claim 10, wherein said at least one sensor comprises a magnetostrictive transducer (12).

12. Machine according to any one of the preceding claims, comprising a squaring machine for plates or tiles.

## Patentansprüche

1. Maschine zum Bearbeiten von Platten oder Fliesen, umfassend mindestens ein Mittel (2) zum Bewegen der besagten Fliesen (T) in der besagten Maschine, mindestens ein Werkzeug (3) zum Behandeln von Fliesen (T) sowie mindestens eine Komponente (4) zum Pressen von Fliesen gegen das besagte mindestens eine Bewegungsmittel (2), wobei die besagte Maschine ferner ein System (5) zum automatischen Einstellen der Position der besagten mindestens einen Presskomponente (4) in mindestens einem jeweiligen Betriebs- oder Arbeitsschnitt umfasst, wobei das besagte Einstellsystem (5) mindestens einen Aktuator (6) zum Bewegen der besagten mindestens einen Presskomponente (4) enthält, worin das besagte automatische Einstellsystem (5) Mittel (7) zur automatischen Regulierung mindestens einer Arbeits- oder Hubende-Position des besagten mindestens einen beweglichen Aktuators (6) umfasst, und der besagte mindestens eine bewegliche Aktuator (6) in einer solchen Position auf die oder auf eine jeweilige Presskomponente (4) drückt oder mit ihr in Eingriff kommt oder auf sie einwirkt, und
worin der besagte mindestens eine bewegliche Aktuator (6) mindestens einen Schaft oder einen ersten Schaft (6a) und einen Zylinder (6b) umfasst, worin der besagte Schaft oder der besagte erste Schaft (6a) verschiebbar montiert ist, so dass er in den Zylinder (6b) einsetzbar und von diesem abnehmbar ist, und worin die besagten automatischen Reguliermittel (7) mindestens ein Anschlagelement (7a) für die Bewegung des besagten mindestens einen Schafts oder eines ersten Schafts (6a) oder des besagten Zylinders (6b) und mindestens einen Hilfsaktuator (7b), der so eingestellt ist, dass er das besagte mindestens eine Anschlagelement (7a) verschiebt, wodurch die Arbeits- oder Hubendposition des besagten mindestens einen beweglichen Aktuators (6) verändert wird, umfassen.

2. Maschine nach Anspruch 1, worin der besagte mindestens eine erste Schaft (6a) eine abschließende oder pilzförmige Erweiterung (6c) aufweist, während das besagte mindestens eine Anschlagelement (7a) einen Kragen oder eine rohrförmige Komponente enthält, wovon das eine Ende mit dem besagten Hilfsaktuator (7b) verknüpft oder verbunden ist und das andere Ende offen ist und zum Inneren des Anschlagelements (7a) hin eine Anschlag- oder Aufschlagschulter (7d) für die abschließende oder pilzförmige Erweiterung (6c) definiert.

3. Maschine nach Anspruch 1 oder 2, worin die besagte mindestens eine Presskomponente (4) mindestens einen Riemen (4a) umfasst, der mittels jeweiliger Riemenscheiben zurückgeführt wird, und worin der besagte mindestens eine bewegliche Aktuator (6) mindestens einen Schaft oder einen zweiten Schaft (6b) enthält, der so wirkt oder eingestellt ist, dass er auf den besagten mindestens einen Riemen (4a) wirkt, um ihn zu dem besagten Bewegungsmittel (2) hin zu schieben.

4. Maschine nach Anspruch 1 und 3 oder 2 und 3, worin der besagte mindestens eine bewegliche Aktuator (6) einen Zylinder (6b) und einen in dem besagten Zylinder (6b) verschiebbar montierten Kolben umfasst, während die jeweiligen ersten (6a) und zweiten (6d) Schäfte des besagten mindestens einen beweglichen Aktuators (6) sich ausgehend von gegenüberliegenden Seiten des Kolbens und entlang derselben Richtung oder entlang von Richtungen, die parallel zueinander sind, erstrecken.

5. Maschine nach irgendeinem der vorangegangenen Ansprüche, wenn abhängig von Anspruch 2, worin das besagte mindestens eine Anschlagelement (7a) an der jeweiligen seitlichen Oberfläche ein Fenster (7e) mit einer Breite begrenzt, die größer als der Schaft (6a) über seine gesamte Erstreckung und größer als die abschließende Erweiterung (6c) über ihre gesamte Erstreckung ist, bis auf einen Abschnitt am jeweiligen offenen Ende, der eine Anschlag- oder Aufschlagschulter (7d) für die abschließende oder pilzförmige Erweiterung (6c) definiert.

6. Maschine nach irgendeinem der vorangegangenen Ansprüche, umfassend einen Rahmen (10), der über dem besagten mindestens einen beweglichen Aktuator (6) montiert ist, der einen Flansch (11) trägt, an dem der Hilfsaktuator (7b) montiert ist.

7. Maschine nach irgendeinem der vorangegangenen Ansprüche, worin ein Schaft (7c) oder ein Zylinder des Hilfsaktuators (7b) auf einer Platte (9), von der sich das besagt Anschlagelement (7a) erhebt, montiert ist oder damit einstückig ist.

8. Maschine nach irgendeinem der vorangegangenen Ansprüche, worin die Spitze des besagten zweiten Schafts (6d) in einem ersten Stift oder Block (13) montiert oder befestigt ist, der mit mindestens einer Kolbenstange (14) einstückig oder verbunden ist, die in einem zweiten Stift (15) an einer Kurbelkomponente (16) oder an einem Fortsatz (16a) davon gelenkig oder drehbar gelagert ist, und eine solche Kurbelkomponente (16b) wiederum in einem dritten Stift (17) an einem Träger (1d) zum Tragen der besagten mindestens einen Presskomponente (4) gelenkig oder drehbar gelagert ist.

9. Maschine nach irgendeinem der vorangegangenen Ansprüche, worin der besagte mindestens eine bewegliche Aktuator (6) pneumatisch ist, während der besagte mindestens eine Hilfsaktuator (7b) elektrisch ist.

10. Maschine nach irgendeinem der vorangegangenen Ansprüche, worin das besagte automatische Einstellsystem mindestens einen Sensor (12) enthält, der so eingestellt ist, dass er die Position des besagten mindestens einen Hilfsaktuators (7b) erfasst.

11. Maschine nach Anspruch 10, worin der besagte mindestens eine Sensor einen magnetostriktiven Wandler (12) umfasst.

12. Maschine nach irgendeinem der vorangegangenen Ansprüche, umfassend eine Quadriermaschine für Platten oder Fliesen.

## Revendications

1. Machine pour le traitement de plaques ou de carreaux comprenant au moins un moyen (2) pour déplacer lesdits carreaux (T) dans ladite machine, au moins un outil (3) pour traiter les carreaux (T) ainsi qu'au moins un composant (4) pour presser des carreaux contre ledit au moins un moyen de déplacement (2), ladite machine comprenant en outre un système (5) pour régler automatiquement la position dudit au moins un composant de pressage (4) dans au moins une découpe de fonctionnement ou de travail respective, ledit système de réglage (5) comportant au moins un actionneur (6) pour déplacer ledit au moins un composant de pressage (4), dans lequel ledit système de réglage (5) automatique comprend des moyens (7) pour régler automatiquement au moins une position de travail ou de fin de course dudit au moins un actionneur mobile (6), et dans cette position, ledit au moins un actionneur mobile (6) appuie ou engage ou agit sur le ou sur un composant de pressage respectif (4), et
dans lequel ledit au moins un actionneur mobile (6) comprend au moins une tige ou une première tige (6a) et un vérin (6b) dans lequel ladite tige ou ladite première tige (6a) est montée de manière coulissante de manière à pouvoir être insérée dans le vérin (6b) et amovible de celui-ci, et dans laquelle lesdits moyens de réglage automatique (7) comprennent au moins un élément de butée (7a) pour le mouvement de ladite au moins une tige ou d'une première tige (6a) ou dudit vérin (6b) et au moins un actionneur auxiliaire (7b) destinés à déplacer ledit au moins un élément de butée (7a), faisant ainsi varier la position de travail ou de fin de course dudit au moins un actionneur mobile (6).

2. Machine selon la revendication 1, dans laquelle ladite au moins une première tige (6a) présente un élargissement terminal ou en forme de champignon (6c), tandis que ledit au moins un élément de butée (7a) comporte un collier ou un composant tubulaire dont une extrémité est contrainte ou reliée audit actionneur auxiliaire (7b) et l'autre extrémité ouverte et définissant, vers l'intérieur de l'élément de butée (7a), une butée ou un épaulement d'impact (7d) pour l'élargissement terminal ou en forme de champignon (6c).

3. Machine selon la revendication 1 ou 2, dans laquelle ledit au moins un composant de pressage (4) comprend au moins une courroie (4a) renvoyée au moyen de poulies respectives et dans laquelle ledit au moins un actionneur mobile (6) comporte au moins une tige ou une deuxième tige (6b) agissant ou étant destinée à agir sur ladite au moins une courroie (4a) de manière à la pousser vers lesdits moyens de déplacement (2).

4. Machine selon les revendications 1 et 3 ou 2 et 3, dans laquelle ledit au moins un actionneur mobile (6) comprend un vérin (6b) et un piston monté de manière coulissante à l'intérieur dudit vérin (6b), tandis que les première (6a) et deuxième (6d) tiges respectives dudit au moins un actionneur mobile (6) sont déployées à partir de côtés opposés du piston et le long de la même direction ou le long de directions qui sont parallèles l'une à l'autre.

5. Machine selon l'une quelconque des revendications précédentes, lorsqu'elle dépend de la revendication 2, dans laquelle ledit au moins un élément de butée (7a) délimite, à la surface latérale respective, une fenêtre (7e) de largeur supérieure à la tige (6a) pour l'extension totale de celle-ci et supérieure à l'élargissement terminal (6c) pour l'extension totale de celle-ci, à l'exception d'une partie à l'extrémité ouverte respective définissant une butée ou un épaulement d'impact (7d) pour l'élargissement terminal ou en forme de champignon (6c).

6. Machine selon l'une quelconque des revendications précédentes, comprenant un cadre (10) monté au-dessus dudit au moins un actionneur mobile (6), qui supporte une bride (11) sur laquelle l'actionneur auxiliaire (7b) est monté.

7. Machine selon l'une quelconque des revendications précédentes, dans laquelle une tige (7c) ou un vérin de l'actionneur auxiliaire (7b) est monté sur ou solidaire d'une plaque (9) à partir de laquelle ledit élément de butée (7a) s'élève.

8. Machine selon l'une quelconque des revendications précédentes, dans laquelle la pointe de ladite deuxième tige (6d) est montée ou fixée à l'intérieur d'une première goupille ou d'un bloc (13) solidaires ou reliés à au moins une tige de piston (14) articulée ou pivotée dans une deuxième goupille (15) à un composant de manivelle (16) ou à un appendice (16a) de celui-ci, et à son tour, ce composant de manivelle (16b) est articulé ou pivoté dans une troisième goupille (17) vers une poutre (1d) pour soutenir ledit au moins un composant de pressage (4).

9. Machine selon l'une quelconque des revendications précédentes, dans laquelle ledit au moins un actionneur mobile (6) est pneumatique, tandis que ledit au moins un actionneur auxiliaire (7b) est électrique.

10. Machine selon l'une quelconque des revendications précédentes, dans laquelle ledit système de réglage automatique comporte au moins un capteur (12) destiné à détecter la position dudit au moins un actionneur auxiliaire (7b).

11. Machine selon la revendication 10, dans laquelle ledit au moins un capteur comprend un transducteur magnétostrictif (12).

12. Machine selon l'une quelconque des revendications précédentes, comprenant une machine d'équerrage pour plaques ou carreaux.
